# EUROPÄISCHE PATENTANMELDUNG

(11) **EP 1 637 574 A1**
(43) Veröffentlichungstag der Anmeldung: **22.03.2006**
(21) Anmeldenummer: 05020135.9
(22) Anmeldetag: 15.09.2005
(51) Int. Cl.: C10G 1/00, B01J 20/04, C01B 3/56, C10K 1/26, C10J 3/00, C10K 3/04

(54) **Verfahren und Vorrichtung zur Erzeugung eines Produktgases durch thermochemische Vergasung eines kohlenstoffhaltigen Einsatzstoffes**

(30) Priorität: 15.09.2004 DE 102004045772
(71) Anmelder: Zentrum für Sonnenenergie- und Wasserstoff-Forschung Baden-Württemberg, 70565 Stuttgart (DE)
(72) Erfinder: Specht, Michael, Dr. rer. nat., 71111 Waldenbuch (DE); Bandi, Andreas, Dr. rer. nat., 70184 Stuttgart (DE); Marquard-Möllenstedt, Tonja, Dipl.-Ing., 76137 Karlsruhe (DE); Sichler, Peter, Dipl.-Ing.(FH), 88499 Riedlingen (DE); Zuberbühler, Ulrich, Dr.-Ing., 70563 Stuttgart (DE)
(74) Vertreter: Patentanwälte Ruff, Wilhelm, Beier, Dauster & Partner

(57) **Zusammenfassung**

2. Die Erfindung bezieht sich auf ein Verfahren und eine Vorrichtung zur Erzeugung eines Produktgases durch thermochemische Vergasung eines kohlenstoffhaltigen Einsatzstoffes, insbesondere Biomasse.
2.2. Erfindungsgemäß wird in einem ersten Prozessschritt eine Niedertemperaturvergasung des kohlenstoffhaltigen Einsatzstoffes in Gegenwart eines exotherm CO₂-bindenden Absorbermaterials derart durchgeführt, dass ein teerarmes Produktgas erhalten wird. In einem zweiten Prozessschritt wird das Absorbermaterial durch eine thermische Desorptionsreaktion unter CO₂-Freisetzung regeneriert.
2.3. Verwendung z.B. zur Gewinnung von Brenngas für eine Verstromung oder von Synthesegas zur Synthese von Kraftstoffen aus Biomasse.

## Beschreibung

Die Erfindung bezieht sich auf ein Verfahren und eine Vorrichtung zur Erzeugung eines Produktgases durch thermochemische Vergasung eines kohlenstoffhaltigen Einsatzstoffes, insbesondere Biomasse.

Verfahren und Vorrichtung dieser Art dienen allgemein dazu, Biomasse und andere kohlenstoffhaltige Brennstoffe durch einen thermochemischen Vergasungsprozess in ein Produktgas zu überführen, das als Hauptkomponenten typischerweise die Gasbestandteile H₂, CO, CO₂, CH₄ und N₂ beinhaltet. Das erzeugte Produktgas kann als Brenngas für eine Verstromung z.B. in einem Gasmotor oder einer Brennstoffzelle oder als Synthesegas zur Synthese von Kraftstoffen eingesetzt werden. Es sind verschiedene diesbezügliche Techniken gebräuchlich. In einem niedrigen Leistungsbereich bis ca. 1MWₜₕ kommen vorwiegend Festbettvergaser zum Einsatz, im mittleren Leistungsbereich über 1MWₜₕ bis ca. 50MWₜₕ dominieren Wirbelschichtvergaser, die gegenüber Festbettvergasern im allgemeinen eine bessere Kontinuität der Gasproduktion aufweisen und ein breiteres Spektrum an Einsatzstoffen zulassen. Im oberen Leistungsbereich über 100MWₜₕ finden vorwiegend Flugstromvergaser Verwendung, z.B. zur Vergasung von Rückständen in der Petrochemie.

Neben den unterschiedlichen Bauformen werden Vergasungsverfahren auch nach der Art der Wärmezufuhr für den Vergasungsprozess und nach den möglichen Vergasungsmitteln, wie Luft, Sauerstoff, Wasserdampf oder auch Wasserstoff, charakterisiert. Bei der autothermen, direkten Vergasung wird die notwendige Wärmemenge durch eine Teilverbrennung des Einsatzstoffs, wie Biomasse, oder des Produktgases im Vergasungsreaktor bereitgestellt. Als Vergasungsmedium im niedrigen Leistungsbereich dient meist Luft, womit ein Schwachgas zur motorischen Nutzung erzeugt werden kann. In großen Flugstromvergasern wird zur Erzeugung von Synthesegas meist Sauerstoff eingesetzt. Bei der allothermen, indirekten Vergasung wird die Vergasungswärme von außen zugeführt, wobei Vergasungsvorgang und wärmeliefernder Verbrennungsvorgang in getrennten Anlagenteilen ablaufen. Das Produktgas aus der allothermen Wasserdampf-Vergasung ist somit nicht mit Abgas aus der externen Verbrennung belastet, d.h. "verdünnt", so dass es einen relativ hohen Heizwert aufweist. Zusätzlich sind auch mehrstufige Verfahren z.B. aus einer Kombination von Pyrolyse und anschließender Reformierung in Gebrauch.

Speziell zur Konversion von Biomasse ist der mittlere Leistungsbereich von ca. 1MWₜₕ bis etwa 50MWₜₕ wegen des dezentralen Anfalls dieses Einsatzstoffs von besonderem Interesse. Die hier meist eingesetzten Wirbelschichtverfahren beinhalten ein fluidisiertes Wirbelbett aus einem inerten Bettmaterial, wie Quarzsand. Bei der Wirbelschichtvergasung werden stationäre und zirkulierende Wirbelschichtverfahren unterschieden. Beim stationären Wirbelschichtverfahren ist die Gasgeschwindigkeit so gewählt, dass Einsatzstoff und mitgerissenes Bettmaterial im ausreichend groß bemessenen Reaktorbereich über der Wirbelschicht verbleiben, während beim zirkulierenden Wirbelschichtverfahren das Bettmaterial ausgetragen, in einem Zyklon abgeschieden und in den Reaktor zurückgeführt wird. Das erzeugte Produktgas weist je nach Einsatzstoff und Vergasungsbedingungen relativ hohe Teer- und Partikelgehalte auf. Allgemein gilt die Regel, dass mit steigender Vergasungstemperatur der Teergehalt abnimmt. Aufgrund des hohen Mineralstoffanteils problematischer Brennstoffe, wie Stroh und andere halmartige Biomasse, und des üblicherweise verwendeten Temperaturbereichs von über 800°C besteht jedoch bei diesen herkömmlichen Verfahren die Tendenz einer Ascheerweichung mit der Folge, dass das Wirbelbett durch Agglomeration des Bettmaterials zusammenfällt. Solche Biomasse-Brennstoffe sind daher für die herkömmliche Wirbelschichtvergasung nicht geeignet. Andererseits führen Temperaturen unterhalb von 800°C in diesen herkömmlichen Verfahren zu unvollständiger thermochemischer Konversion und erhöhten Teerkonzentrationen, was ebenfalls die Gefahr eines Ausfalls der Wirbelschicht mit sich bringt.

Eine schwerwiegende Problematik der herkömmlichen thermochemischen Konversionsprozesse für Biomasse besteht darin, dass das erzeugte Produktgas noch einen relativ hohen Teergehalt besitzt. Dies gilt insbesondere auch für die Wirbelschichtvergasung, bei der die Produktgase typischerweise noch einen mittleren Teergehalt in der Größenordnung von mehreren zehn Gramm pro Normkubikmeter (g/Nm³) aufweisen. Die hohen Teerkonzentrationen im Produktgas sind für die meisten nachfolgenden Nutzungsprozesse, wie Reinigung des Produktgases, Motor-, Turbinen- und Brennstoffzellennutzung sowie Nutzung als Synthesegas, störend. Bei den meisten kommerziellen Vergasungsanlagen erfolgt die Produktgasnutzung daher bislang meist nur durch Verbrennung als Zufeuerung in bestehenden Kesselfeuerungsanlagen. Flugstromvergasungsprozesse ergeben zwar aufgrund der dort üblichen hohen Prozesstemperatur deutlich über dem Ascheschmelzpunkt Produktgase mit gewünscht niedrigem Teergehalt, sie sind aber vergleichsweise aufwändig und werden üblicherweise erst im sehr hohen Leistungsbereich ab einigen 100MW eingesetzt, so dass sie für die dezentrale Verwertung von Biomasse weniger geeignet sind.

Festbettvergaser sind insbesondere als Gleichstrom- und als Gegenstromtyp gebräuchlich, wobei der Gleichstromtyp noch vergleichsweise geringere Teergehalte liefert, indem die Teere in der letzten, als Reduktionszone ausgelegten Vergasungsprozesszone durch Kontakt mit sehr heißem Koks stärker abgebaut werden als beim Gegenstromtyp, allerdings zu Lasten einer geringeren Vergasungseffizienz. Dennoch liegen die Teerkonzentrationen für beide Festbettvergasertypen noch immer bei mehreren Gramm bis mehreren hundert Gramm pro Nm³ und damit weit über einem für zahlreiche Anwendungen wünschenswerten Maximalwert von vorzugsweise unter 1g/Nm³.

Bei Festbettvergasungsanlagen zur Synthesegaserzeugung oder zur Kraftstofferzeugung aus Kohle wird meist Sauerstoff als Oxidationsmedium eingesetzt. Speziell zur Kohlevergasung zwecks Kraftstofferzeugung haben sich zwei unter Druck, typisch 25bar, betriebene Prozesse in Form eines trocken entaschenden Lurgi-Vergasers und eines nass entaschenden Britisch-Gas-Lurgi(BGL)-Vergasers durchgesetzt. Durch den Einsatz von reinem Sauerstoff wird die Temperatur so hoch, dass die Asche schmilzt und flüssig abgezogen werden kann. Zur Einstellung der gewünschten Vergasungstemperatur von 800°C bis 1300°C wird bereits im Reaktor Wasserdampf zugegeben.

Flugstromvergaser werden neben Festbettvergasern am häufigsten kommerziell zur Synthesegaserzeugung eingesetzt, in der Regel ohne Wärmenutzung des Produktgases nur als sogenannte Quenchsysteme, betrieben mit einer Mischung aus Sauerstoff und Wasserdampf. Die Sauerstoffmenge wird so eingestellt, dass die Vergasungstemperatur ausreicht, den partikulären Kohlenstoff vollständig umzusetzen. Da die typischerweise verwendeten Brennstoffe, wie Petrol-Koks und Steinkohle, hohe Kohlenstoffanteil haben, sind teilweise Temperaturen von deutlich über 1500°C nötig, wodurch die Asche schmelzflüssig ist. Am Vergaserende wird Wasser eingedüst, welches die Schlacke abschreckt und zur Reformierung des entstandenen Produktgases dient.

Bei einem von der Firma D.M.2 Dr. Mühlen GmbH im sogenannten blauen Turm in Herten realisierten mehrstufigen Vergasungsverfahren zur Erzielung eines inertgasfreien heizwertreichen Produktgases werden drei Reaktoren für Pyrolyse, Reformierung und Verbrennung eingesetzt. Der Einsatz von Sauerstoff wird vermieden, indem ein fester Wärmeträger in Form von Kugeln benutzt wird, mit dem die Wärme in den Reformierungsreaktor eingekoppelt wird. Die Kugeln werden im Verbrennungsreaktor erwärmt, in welchem der in der Pyrolyse verbleibende Rückstand verbrannt wird. Im durch die heißen Kugeln beheizten Reformierungsreaktor werden die gasförmigen Bestandteile aus dem Pyrolysereaktor bei ca. 950°C umgesetzt, bevor ihre Restwärme zur Beheizung der Pyrolyse bei 500°C bis 600°C genutzt wird.

Von der Universität Wien wurde ein Vergasungsverfahren und eine entsprechende Anlage mit sogenanntem FICFB ("Fast Internally Circulating Fluidised Bed") entwickelt, bei dem die zur Vergasung notwendige Wärmemenge durch ein fluidisiertes SiO₂-Bettmaterial, z.B. Quarzsand oder Olivin, in einen Vergasungsreaktor eingebracht wird. Das SiO₂₋Bettmaterial wird im Kreislauf zwischen dem Vergasungsreaktor und einem angekoppelten Verbrennungsreaktor geführt, in welchem es nach Wärmeabgabe im Vergasungsreaktor wieder aufgeheizt wird. Die Aufheizung erfolgt auf eine Temperatur über 800°C, z.B. ca. 850°C, und mit dieser Temperatur wird das SiO₂-Bettmaterial in den Vergasungsreaktor rezykliert, so dass dort ungefähr die gleiche Temperatur für den Vergasungsprozess bereitgestellt wird.

Experimentelle Ergebnisse zeigen, dass bei den herkömmlichen Vergasungstechniken für Biomasse je nach Temperatur und den übrigen Prozessparametern unterschiedliche Mengen an Gasen, Teeren und Koks entstehen, wobei typischerweise ein gewisser Anteil der eingesetzten Biomasse in Teere konvertiert wird. Die Teere bestehen vorwiegend aus zyklischen und polyzyklischen Aromaten. Unterhalb von 300°C bis 400°C liegen die meisten Teere in kondensierter Form vor und bergen die Gefahr schwerwiegender Schäden in nachfolgenden Prozessen. Andererseits haben die Teere einen hohen Heizwert, so dass es wünschenswert ist, sie in umgewandelter Form im Produktgas beizubehalten oder zumindest in den energetischen Vergasungskreislauf zurückzuführen. Die Teerbildung durchläuft temperaturabhängig verschiedene Phasen. Primäre Teere entstehen während des Pyrolysevorgangs der Biomasse bei Zufuhr von Wärme. Zellulose, Hemizellulose und Lignin als die drei Hauptbestandteile von Biomasse zerfallen im primäre Teere mit unterschiedlichen Eigenschaften. Zellulose und Hemizellulose, die viel Sauerstoff enthalten, bilden überwiegend sauerstoffreiche reaktive Primärteere mit Alkohol-, Keton-, Aldehyd- oder Karbonsäure-Funktionen, wie Essigsäure, Propionsäure, Buttersäure, Acetol, Furfurol, Furfural etc. Durch die pyrolythische Zersetzung von Lignin entstehen dagegen meist bi- und trifunktionelle Monoaromaten, wie Phenol, Cresol, Dimethylphenol, Guajacol etc. Die Bildungstemperatur der primären Teere liegt bei 200°C bis 500°C. Obwohl die meisten Primärteere Siedepunkte unter 250°C aufweisen, verursachen sie bei langsamer Abkühlung bereits bei deutlich höheren Temperaturen Probleme durch Bildung von Mischkondensationsprodukten mit harzähnlichen Eigenschaften.

Bei Temperaturerhöhung in Anwesenheit von Oxidationsmitteln wird ein Teil der primären Teere zu CO, H₂, CO₂ und H₂O umgesetzt. Der Rest der primären Teere bildet die sekundären Teere. Diese bestehen größtenteils aus alkylierten Mono- und Diaromaten und Heteroaromaten, wie Pyridin, Furan, Dioxin, Thiophen etc. Die wichtigsten Umwandlungsschritte von Primär- in Sekundärteere zeichnen sich durch Abspaltung kleiner gasförmiger Moleküle aus, wie Dehydratisierung, Decarboxilierung und Decarbonylierung.

Oberhalb von ca. 800°C finden sich nur die sogenannten tertiären Teere, auch als Hochtemperaturteere bezeichnet. Typische Tertiärteere sind Naphthalin, Phenanthren, Pyren, Benzopyren etc. Sie können durch Rekombination von kleinen Molekülfragmenten, wie Aryl- und Alkylradikalen entstehen, die ihrerseits aus der Spaltung von Sekundärteeren herrühren.

Zur Entfernung bzw. Konversion der gebildeten Teere sind physikalische Methoden, wie Wäscher oder Filter, sowie thermische oder katalytische Methoden einsetzbar. In jedem Fall ist dies mit entsprechendem Prozessaufwand verbunden. Zudem entstehen z.B. bei den meisten Wäschern entsorgungspflichtige, flüssige Abfallströme, oder die Waschflüssigkeit muss regeneriert werden. Zudem bleibt der Energiegehalt der Teere ungenutzt. Eine thermische oder katalytische Teerkonversion stellt einen aufwändigen Prozess dar. Bei der thermischen Spaltung werden die Teere z.B. durch partielle Oxidation bei Temperaturen über 1300°C gecrackt. Die verbleibende Restteerkonzentration ist dennoch für viele Anwendungen noch zu hoch. Durch eine katalytische Teerspaltung mit Metallkatalysatoren auf Nickelbasis bei ca. 800°C kann der Teergehalt weiter reduziert werden. Es wurden auch bereits Oxidkatalysatoren, wie CaO, calzinierter Dolomit etc., für die Teerspaltung bei hohen Temperaturen von ca. 900°C in Wirbelschichtreaktoren eingesetzt.

In der Patentschrift DE 199 46 381 C2 sind ein Verfahren und eine Vorrichtung zur Erzeugung eines kohlendioxidarmen, wasserstoffreichen Gases oder eines konditionierten Synthesegases aus einem kohlenstoffhaltigen Einsatzstoff unter Anwendung einer Pyrolyse- und/oder Dampfreformierungsreaktion beschrieben, bei denen in einem ersten Prozessschritt die Pyrolyse und/oder Dampfreformierung des kohlenstoffhaltigen Einsatzstoffs in Gegenwart eines exotherm CO₂-bindenen Absorbermaterials derart durchgeführt wird, dass gebildetes Kohlendioxid vollständig oder kontrolliert partiell durch das Absorbermaterial vom erzeugten Produktgas abgetrennt wird, das dadurch als kohlendioxidarmes, wasserstoffreiches Gas oder konditioniertes Synthesegas bereitsteht, und in einem zweiten Prozessschritt das Absorbermaterial durch eine thermische Desorptionsreaktion unter CO₂-Freisetzung regeneriert wird. Als Einsatzstoff kann unter anderem Biomasse dienen. Diese wird einer Pyrolyse unterzogen, und das entstehende Pyrolysegas wird einer Dampfreformierung unterzogen, während der Pyrolysekoks verbrannt wird, um die Verbrennungswärme für die Dampfreformierung zu nutzen. Die Regeneration des CO₂-bindenden Absorbermaterials kann in der Pyrolysekoksverbrennungseinheit erfolgen. Die Prozessführung ist speziell auf die Erzielung eines ausreichend geringen Kohlendioxidgehalts und ausreichend hohen Wasserstoffgehalts des Produktgases ausgelegt, so dass sich das Produktgas z.B. für den Einsatz in PEM-Brennstoffzellen und anderen Anwendungen eignet, die hohe Wasserstoffgehalte und niedrige Kohlenoxidgehalte des Einsatzgases erfordern.

Der Erfindung liegt als technisches Problem die Bereitstellung eines Verfahrens und einer Vorrichtung zugrunde, mit denen sich mit relativ geringem Aufwand ein Produktgas mit vergleichsweise niedrigem Teergehalt durch thermochemische Vergasung eines kohlenstoffhaltigen Einsatzstoffes erzielen lässt, insbesondere auch bei Verwendung von Biomasse als Einsatzstoff, einschließlich mineralstoffreicher und/oder feuchter Biomasse.

Die Erfindung löst dieses Problem durch die Bereitstellung eines Verfahrens mit den Merkmalen des Anspruchs 1 und einer Vorrichtung mit den Merkmalen des Anspruchs 13.

Erfindungsgemäß wird der kohlenstoffhaltige Einsatzstoff in Gegenwart eines exotherm CO₂-bindenden Absorbermaterials in einem Niedertemperatur-Vergasungsprozess derart umgesetzt, dass ein teerarmes Produktgas erhalten wird. In einem zweiten Prozessschritt wird das Absorbermaterial durch eine thermische Desorptionsreaktion unter CO₂₋Freisetzung regeneriert.

Mit der Charakterisierung "Niedertemperatur" ist dabei vorliegend zu verstehen, dass die betreffenden Vergasungsprozesse bei einer verglichen mit den Prozesstemperaturen der eingangs erwähnten, herkömmlichen Vergasungsverfahren niedrigeren Prozesstemperatur von im allgemeinen unter 800°C und in vorteilhaften Ausführungsformen unter 750°C, speziell auch bei ca. 700°C und darunter, jeweils bezogen auf einen Prozessparameterdruck in der Größenordnung von 1 bar, ausgeführt werden. Insbesondere wird in vorteilhaften Ausführungsformen beim vorliegenden Niedertemperaturprozess die Prozesstemperatur unterhalb des von der Zusammensetzung des Einsatzstoffes abhängigen Ascheerweichungspunktes gehalten, der meist in der Größenordnung von 800°C liegt.

Unter dem Begriff "teerarmes Produktgas" ist vorliegend ein Produktgas mit einer Teerkonzentration zu verstehen, die niedriger als bei den Produktgasen ist, die durch die eingangs erwähnten herkömmlichen Festbett- und Wirbelschichtvergasungsprozesse erhalten werden, d.h. höchstens im Bereich von etwa 1g/Nm³ und in vorteilhaften Ausführungsformen unterhalb von 0,5g/Nm³, in bestimmten Fällen nur bei etwa 0,1g/Nm³ oder weniger.

Es hat sich überraschenderweise und unerwartet gezeigt, dass durch diese Prozessführung unter Einsatz des exotherm CO₂-bindenden Absorbermaterials mit diesem Niedertemperatur-Vergasungsprozess die erwähnte niedrige Teerkonzentration, d.h. das teerarme Produktgas, schon ohne weitere Zusatzmaßnahmen der Teerentfernung oder Teerkonversion erzielt werden kann, ohne dass dazu Prozesstemperaturen über dem Ascheerweichungspunkt bzw. über etwa 800°C erforderlich sind, im Gegensatz zu der aus den herkömmlichen Vergasungsverfahren bekannten Regel, dass sich niedrige Teergehalte von merklich unter einigen g/Nm³ nur bei Temperaturen über etwa 800°C erreichen lassen. Es wird angenommen, dass hierfür das CO₂-bindende Absorbermaterial als Bettmaterial, das direkt in das Reaktionsgeschehen eingreift, hauptverantwortlich ist, wozu verschiedene Reaktionsmechanismen in Betracht kommen.

So ist der Anteil der sekundären und tertiären Teere im Produktgas schon aufgrund der vergleichsweise niedrigen Prozesstemperatur entsprechend reduziert, da sich tertiäre Teere z.B. meist erst oberhalb 800°C bilden. Des weiteren kann die Prozessführung so eingestellt werden, dass bei der Pyrolyse entstehende Primärteere in einer Folgereaktion im Rahmen des Niedertemperatur-Vergasungsprozesses schneller zu einem wasserstoffreichen Produktgas umgesetzt werden, als sie Sekundärteere bilden können. Denn das CO₂-bindende Absorptionsmaterial ist in der Lage, die chemischen Gleichgewichte der Konversionsreaktionen und der Folgereaktionen im Rahmen des Niedertemperatur-Vergasungsprozesses entsprechend zu verschieben, was sowohl für die eigentliche Umsetzungsreaktion des Einsatzstoffes als auch für die Umsetzung der entstehenden Folgeprodukte und damit auch der Teere gilt. Analog können auch Sekundär- und Tertiärteere wie der Einsatzstoff selbst aufgrund der CO₂-Abtrennung aus der Reaktionszone durch das CO₂-bindende Absorbermaterial beschleunigt umgesetzt, z.B. reformiert, werden.

Das CO₂-bindende Absorbermaterial ist in bestimmten Ausführungsformen zudem in der Lage, ebenso wie gebildeter Koks, auf der Oberfläche Teere zu adsorbieren, so dass die Teere im zweiten Prozessschritt zur Wärmeerzeugung durch Verbrennung für die thermische Desorptionsreaktion genutzt werden können. Diese Teeradsorption wird durch die relativ niedrige Prozesstemperatur begünstigt, während sie z.B. bei herkömmlichen Vergasungsprozessen mit Temperaturen über 850°C nicht mehr stattfindet. Zu einem geringen Teergehalt des erfindungsgemäß erzeugten Produktgases kann auch eine wenigstens teilweise hydrierende Vergasung des Einsatzstoffs und der Folgeprodukte beitragen, wie sie bei höheren Wasserstoffkonzentrationen von z.B. größer als 60% im Produktgas erfolgt, indem die Bildung kondensierter Aromaten unterdrückt wird.

Durch die prozessinhärente Teerminderung in-situ können nachgeschaltete Teerreinigungsstufen entfallen oder erheblich entlastet werden, und es fallen weniger zu entsorgende Reststoffe an. Zudem bleibt durch die in-situ-Teerminderung die chemisch gebundene Energie der Teere im Produktgas erhalten, während sie in nachgeschalteten Reinigungsstufen in der Regel verloren geht.

Vorteilhaft kann die Niedertemperaturvergasung im ersten Prozessschritt bei einer Prozesstemperatur unterhalb der zugehörigen Ascheerweichungstemperatur bzw. unterhalb eines Temperaturäquivalents von ca. 800°C bei einem Druck von 1bar, in bestimmten Ausführungsformen bei ca. 700°C oder weniger, und/oder bei einem Temperaturäquivalent bezogen auf drucklosen Betrieb zwischen etwa 600°C und 700°C, insbesondere bei etwa 650°C, ausgeführt werden. Der Begriff Temperaturäquivalent bedeutet hierbei, dass bei Wahl anderer Drücke die Prozesstemperatur etwas modifiziert sein kann, d.h. auch etwas über 800°C liegen kann, wobei sie weiterhin unter dem Ascheerweichungspunkt liegt.

In einer vorteilhaften Weiterbildung der Erfindung werden die Prozessparameter für die Niedertemperaturvergasung, insbesondere die Temperatur und der Druck sowie Art und Menge des CO₂-bindenden Absorbermaterials, derart eingestellt, dass der Teergehalt im durch die Niedertemperaturvergasung erhaltenen Produktgas kleiner als 2g/Nm³ und in vorteilhaften Ausführungsformen bei nur 0,5 g/Nm³ oder niedriger gehalten wird.

Der erste Prozessschritt kann insbesondere eine Pyrolyse- und/oder Dampfreaktion zur Niedertemperaturvergasung beinhalten.

Vorteilhaft verwendbare, exotherm CO₂-bindende Absorbermaterialien sind im Anspruch 5 angegeben.

In vorteilhafter Weiterbildung der Erfindung erfolgt im ersten Prozessschritt, d.h. bei der Niedertemperaturvergasung des kohlenstoffhaltigen Einsatzstoffes, eine Einbindung von im Einsatzstoff enthaltenen Schadstoffen, wie Schwefel- und/oder Halogenverbindungen, in das CO₂₋Absorbermaterial, das hierzu geeignet gewählt wird.

In einer vorteilhaften Ausführungsform der Erfindung dient mineralstoffreiche und/oder feuchte Biomasse, z.B. mit einem Feuchtigkeitsgehalt von 20% oder mehr, als Einsatzstoff. Der Einsatz feuchter Biomasse kann in Ausgestaltung der Erfindung geregelt bzw. variabel derart erfolgen, dass die Temperatur im Niedertemperaturvergasungsprozess in einem gewünschten Bereich gehalten wird, insbesondere unterhalb eines vorgebbaren Überhitzungsgrenzwertes.

In einer weiteren Verfahrensausgestaltung wird ein SiO₂-armes oder SiO₂-freies Reaktorbettmaterial für den ersten und/oder den zweiten Prozessschritt benutzt, wodurch einer Verklebung des Bettmaterials entgegengewirkt werden kann.

In einer vorteilhaften Weiterbildung des erfindungsgemäßen Verfahrens wird in einem dritten Prozessschritt eine sekundäre Teerreinigung des in der Niedertemperaturvergasung erhaltenen Produktgases unter Verwendung des durch die thermische Desorptionsreaktion aufgeheizten, regenerierten Absorbermaterials durchgeführt. Mit dieser Maßnahme lässt sich der Teergehalt des Produktgases weiter merklich verringern. Das regenerierte Absorbermaterial kann dann nach diesem sekundären Teerreinigungsprozess in den Niedertemperaturvergasungsprozess rezykliert werden. Für den zweiten und dritten Prozessschritt günstige Temperaturen liegen z.B. bei einem Temperaturäquivalent bezogen auf drucklosen Betrieb zwischen etwa 800°C und etwa 900°C, insbesondere bei ca. 850°C.

Die erfindungsgemäße Vorrichtung ist so eingerichtet, dass damit das erfindungsgemäße Verfahren in einer vorteilhaften Weise durch je eine Reaktoreinheit für die beiden Prozessschritte ausgeführt werden kann, alternativ auch durch eine Eintopfreaktion mit einem einzelnen, alternierend in den beiden Prozessschritten betriebenen Reaktor oder einem Wechselbetrieb wenigstens zweier paralleler Reaktoren, die alternierend im Niedertemperatur-Vergasungsbetrieb und Desorptionsbetrieb gefahren werden. In Realisierungen mit prozessintegrierter sekundärer Teerreinigung beinhaltet die Vorrichtung eine entsprechende sekundäre Teerreinigungsstufe.

Vorteilhafte Ausführungsformen der Erfindung sind in den Zeichnungen dargestellt und werden nachfolgend beschrieben. Hierbei zeigen:
- Fig. 1: eine Blockdiagrammdarstellung einer grundsätzlichen Prozessführung für ein Verfahren und eine Vorrichtung zur Erzeugung eines teerarmen Produktgases durch thermochemische Niedertemperaturvergasung eines kohlenstoffhaltigen Einsatzstoffes,
- Fig. 2: ein Blockdiagramm einer Anlagenausführung zur Realisierung einer Prozessführung entsprechend Fig. 1 auf Basis einer Wirbelschichttechnik mit Zyklonabscheidung,
- Fig. 3: eine schematische Schnittansicht einer weiteren Anlage zur Realisierung einer Prozessführung entsprechend Fig. 1,
- Fig. 4: ein Blockdiagramm einer Anlagenausführung mit zusätzlicher sekundärer Teerreinigung und
- Fig. 5: eine schematische Schnittansicht einer Anlage nach Art von Fig. 3, die jedoch zur Durchführung einer sekundären Teerreinigung nach Art von Fig. 4 modifiziert ist.

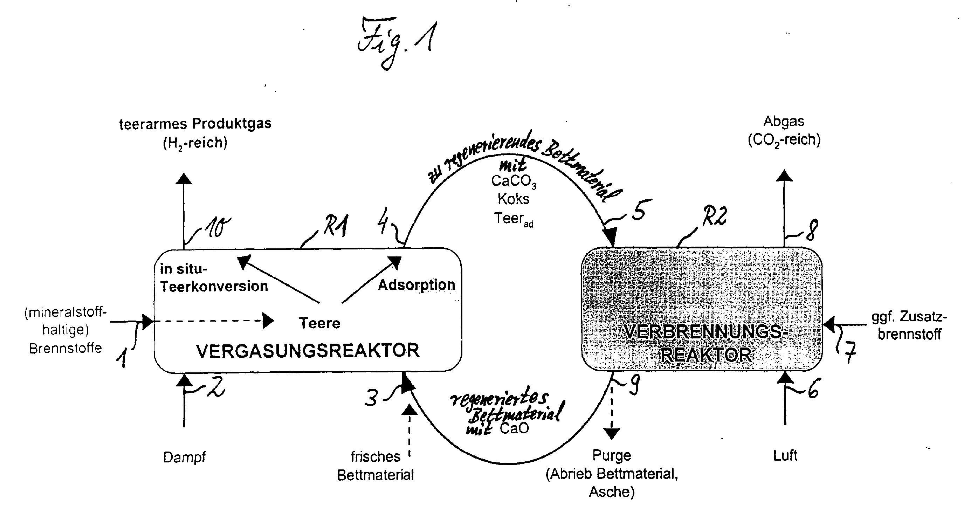

Fig. 1 veranschaulicht im Blockdiagramm ein erfindungsgemäßes Verfahren und eine erfindungsgemäße Vorrichtung zur Erzeugung eines teerarmen und wasserstoffreichen Produktgases durch thermochemische Niedertemperaturvergasung eines kohlenstoffhaltigen Einsatzstoffes. Bei dem Einsatzstoff kann es sich insbesondere um Biomasse handeln, aber auch um beliebige andere mineralstoffhaltige Brennstoffe und andere kohlenstoffhaltige Einsatzstoffe. Die Verfahrensführung umfasst grundsätzlich zwei Prozessschritte, denen im Beispiel von Fig. 1 je eine Reaktoreinheit zugeordnet sind. Ein Vergasungsreaktor R1 dient der Durchführung einer Niedertemperaturvergasung des über einen Einsatzstoffeinlass 1 zugeführten Einsatzstoffes.

Speziell beinhaltet der Niedertemperatur-Vergasungsprozess eine absorptionsunterstützte Reformierung (AER), durch welche der Einsatzstoff mittels Pyrolyse und/oder Dampfreformierung in Gegenwart eines exotherm CO₂-bindenden Absorbermaterials umgesetzt wird. Dazu wird dem Vergasungsreaktor R1 über einen Dampfeinlass 2 Wasserdampf und über einen Bett-/Absorbensmaterialeinlass 3 ein geeignetes Bettmaterial einschließlich eines CO₂-Absorbens, wie CaO, zugeführt. Zu regenerierendes CO₂-Absorbens, CaCO₃ im Fall von CaO als Absorbens, wird zusammen mit Koks und adsorbierten Teeren über einen zugehörigen Feststoffauslass 4 aus dem Vergasungsreaktor R1 abgeführt und über einen zugehörigen Einlass 5 in einen parallel betriebenen Verbrennungsreaktor R2 eingespeist.

In diesem Verbrennungsreaktor R2 wird durch einen Verbrennungsvorgang, für den auch der zugeführte Koks und adsorbierte Teere aus dem Vergasungsreaktor R1 genutzt werden, Wärme zur Durchführung einer thermischen Desorptionsreaktion erzeugt, durch die das exotherm CO₂bindende Absorbermaterial unter CO₂-Freisetzung regeneriert wird. Dazu wird je nach Bedarf über zugehörige Einlässe 6, 7 Luft oder ein anderes Oxidationsmittel und ggf. ein Zusatzbrennstoff in den Verbrennungsreaktor R2 geleitet. Das CO₂-reiche Abgas wird über einen entsprechenden Gasauslass 8 abgeführt. Das regenerierte CO₂-Absorbens wird über einen zugehörigen Feststoffauslass 9 aus dem Verbrennungsreaktor R2 heraus und zum Vergasungsreaktor R1 rückgeführt, wobei durch einen geeigneten Trennprozess Bettmaterialabrieb und Asche separat abgetrennt werden. Je nach Anlagenausführung wird die Asche auch ganz oder teilweise als Flugasche vom Abgasstrom mitgeführt und kann von diesem durch einen an den Gasauslass 8 angekoppelten, nicht gezeigten Zyklon abgetrennt werden.

Das im Vergasungsreaktor R1 ausgeführte AER-Verfahren zur Niedertemperaturvergasung beinhaltet in einer vorteilhaften Realisierung eine Wasserdampfvergasung einschließlich Wassergas-Shift-Reaktion und CO₂-Absorption basierend auf den folgenden drei Teilreaktionen:

CHₓO_{y} + (1-y) H₂O → CO + (0,5x + 1 - y) H₂ ,ΔH_{R} > 0 (1)

CO + H₂O → CO₂ + H₂ , ΔH_{R} < 0 (2)

CaO + CO₂ → CaCO₃ , ΔH_{R} < 0 (3)

Dies führt zu folgender idealisierter Summenreaktion des AER-Prozesses:

CHₓO_{y} + (2-y) H₂O + CaO→ CaCO₃ + (0,5x + 2 - y) H₂ (4)

Dabei umfasst CHₓO_{y} z.B. sowohl Biomasse als auch Teere. Das CO₂₋Absorbens verschiebt als Bettmaterial die chemischen Gleichgewichte dieser Konversions- und Folgereaktionen aufgrund der simultanen CO₂₋Abtrennung in-situ in Richtung des Produktgases Wasserstoff. Der Einfluss des CO₂-Absorbens auf die Reaktionsgleichgewichte hat somit nicht nur direkten Einfluss auf die Reformierung des Einsatzstoffes, sondern auch auf die Reformierung der entstehenden Folgeprodukte und damit insbesondere auch der Teere. Die Temperatur des AER-Prozesses wird unterhalb des Ascheerweichungspunktes bzw. in der Regel unterhalb von 800°C bei einem Druck von 1 bar gehalten, in vorteilhaften Ausführungsformen bei nur etwa 700°C oder weniger bei einem Druck von 1 bar. Im übrigen kann zu weiteren Details des AER-Prozesses auf die schon erwähnte Patentschrift DE 199 46 381 C2 verwiesen werden, in welcher ein solcher AER-Prozess in einer Realisierung beschrieben ist, bei der die Prozessführung auf die Erzielung eines möglichst kohlendioxid- und kohlenmonoxidarmen, wasserstoffreichen Gases ausgelegt ist, dort als R/CA-Prozess bezeichnet.

Das erfindungsgemäße Verfahren zeichnet sich gegenüber den oben erläuterten herkömmlichen Vergasungsverfahren folglich vor allem dadurch aus, dass die Vergasungstemperatur mit dem Einsatz des CO₂bindenden Absorbermaterials vergleichsweise gering gehalten und gleichzeitig die Teerbildung drastisch reduziert werden kann. Es hat sich hierbei gezeigt, dass der Teergehalt im aus dem Vergasungsreaktor R1 über einen Produktgasauslass 10 abgeführten Produktgas schon ohne weitere Teerentfernungsmaßnahmen unter 2g/Nm³ und typischerweise unter 1 g/Nm³ liegt, bei optimierter Prozessführung auch noch deutlich darunter, insbesondere im Bereich von 0,3g/Nm³ und weniger. Das so erzeugt teerarme Produktgas kann daher häufig schon ohne weitere Teerentfernungsmaßnahmen in entsprechenden Anwendungen eingesetzt werden, die derart niedrige Teerkonzentrationen erfordern. In jedem Fall kann eine etwaige nachgeschaltete Teerentfernungsstufe signifikant entlastet werden, und es fallen weniger zu entsorgende Reststoffe an.

Die Ursachen für diesen unerwartet niedrigen Teergehalt des bei diesem Niedertemperaturprozess unterhalb des Ascheerweichungspunktes von typischerweise 800°C und sogar bei Prozesstemperaturen unterhalb von 700°C und Drücken im Bereich von 1 bar sind bislang nicht eindeutig geklärt, sehr wahrscheinlich ist jedoch eine Kombination mehrerer günstiger Reaktionsmechanismen aufgrund der Gegenwart des CO₂bindenden Absorbermaterials verantwortlich. Diese wurden bereits weiter oben diskutiert, worauf verwiesen werden kann. So hindert die relativ niedrige Prozesstemperatur bereits die Bildung von Sekundär- und Tertiärteeren. Die Anwesenheit des CO₂-bindenden Absorbens begünstigt die Umwandlung von Primärteeren, die durch den Pyrolyseprozess entstehen, in einer Folgereaktion gemäß dem AER-Prozess zu wasserstoffreichem Produktgas statt zu Sekundärteeren. Sekundär- und Tertiärteere können durch den AER-Prozess in-situ zu wasserstoffreichem Produktgas reformiert werden.

Des weiteren können Teere durch einen bei der relativ niedrigen Vergasungstemperatur möglichen Adsorptionsprozess an Oberflächen des aus dem Vergasungsreaktor R1 abgezogenen Feststoffmaterials, wie Koks und zu regenerierendes CO₂-Absorbens, angelagert und dadurch zur Wärmeerzeugung für den Desorptionsprozess des CO₂-Absorbens genutzt werden. Zudem ist in Anwesenheit hoher Wasserstoffkonzentrationen von z.B. mehr als 60% im Produktgas des AER-Prozesses die Bildung kondensierter Aromaten unterdrückt, indem der Einsatzstoff und dessen Folgeprodukte bei den hohen Wasserstoffkonzentrationen teilweise hydrierend vergast bzw. mit Wasserstoff abgesättigt werden. Insgesamt ermöglicht diese in-situ-Teerminderung gemäß der Erfindung, dass Teere schon gar nicht in signifikanter Menge gebildet werden und im übrigen die chemisch gebundene Energie der gebildeten Teere im Produktgas erhalten bleibt, indem die Teere zu einem H₂-reichen Produktgas reformiert bzw. zur Aufheizung des CO₂-bindenden Bettmaterials während dessen Desorption genutzt werden.

Wenn Schadstoffe im Einsatzstoff enthalten sind, wie Schwefel- und/oder Halogenverbindungen, werden diese bei Wahl eines hierfür geeigneten CO₂-Absorbermaterials als Bettmaterial im Prozessschritt der Niedertemperaturvergasung in das Bettmaterial eingebunden und werden dann zusammen mit dem Bettmaterialabrieb und Asche aus dem Prozess ausgetragen, so dass sie nicht in das Produktgas gelangen. Dabei sind die Schadstoffe so in das Bettmaterial eingebunden, dass die betreffenden Reststoffe problemlos deponiert oder als Biomüll entsorgt und in manchen Fällen sogar als Dünger verwendet werden können. Schwefel kann z.B. als Sulfat eingebunden werden. In der Regel bestehen die Reststoffe im Wesentlichen aus Calcium- /Magnesiumcarbonat und Asche, wenn das entsprechende CO₂₋Absorbens benutzt wird. Gegebenenfalls lassen sich die Reststoffe auch als Zuschlagstoffe für die Bauindustrie z.B. bei der Zementherstellung verwenden.

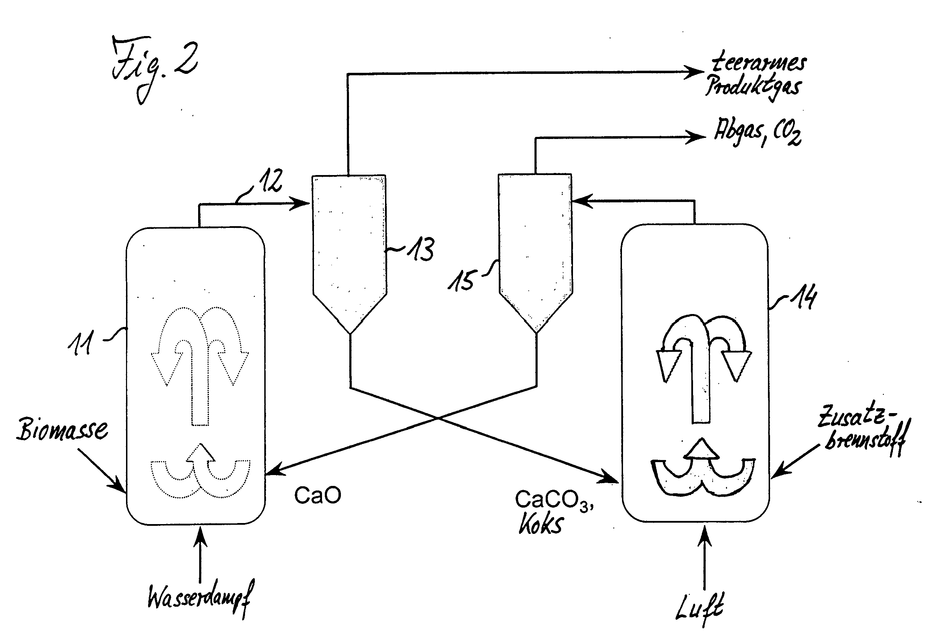

Fig. 2 zeigt eine konkretere Anlagenauslegung zur Realisierung der Prozessführung gemäß Fig. 1. In diesem Beispiel dient ein Vergaser 11 vom Wirbelschichttyp als Vergasungsreaktor zur Durchführung des Niedertemperatur-AER-Vergasungsprozesses von zugeführter Biomasse unter Wasserdampfzufuhr. Der vom AER-Vergaser 11 erzeugte Produktgasstrom 12 wird einem Zyklon 13 zugeführt, um daraus mitgeführtes Feststoffmaterial abzuscheiden, insbesondere das zu regenerierende CO₂-Absorbens, wie CaCO₃, und Koks, ggf. mit adsorbierten Teeren. Am Gasausgang des Zyklons 13 steht daher das gewünschte teerarme Produktgas zur Verfügung.

Als Verbrennungsreaktor dient im Beispiel von Fig. 2 ein Brenner 14 zur Desorption des zugeführten, zu regenerierenden CO₂-Absorbens, wozu das vom Zyklon 13 zusammen mit dem zu regenerierenden CO₂₋Absorbens zugeführte Koksmaterial, ggf. mit angelagerten Teeren, und bei Bedarf zusätzlich eingespeister Brennstoff unter Luftzufuhr verbrannt werden. Der Brenner 14 kann, wie in Fig. 2 angedeutet, ebenfalls vom Wirbelschichttyp sein. Der Ausgang des Brenners 14 führt zu einem weiteren Zyklon 15, in welchem das regenerierte CO₂-Absorbens, wie CaO, aus dem Brennerabgas abgetrennt wird, das den Zyklon 15 dann als CO₂-reiches Abgas verlässt.

In alternativen Anlagenrealisierungen können statt der Zyklone auch beliebige andere herkömmliche Materialabscheideeinheiten eingesetzt werden. Die Erfindung ist zudem in gleicher Weise mit anderen herkömmlichen Wirbelschicht-Vergaseranlagen implementierbar, indem das CO₂-Absorbens im Bettmaterial der Vergasungsreaktoreinheit vorgesehen und die gesamte Prozessführung nach dem erfindungsgemäßen Verfahren eingestellt wird, einschließlich der Desorption des CO₂₋Absorbermaterials.

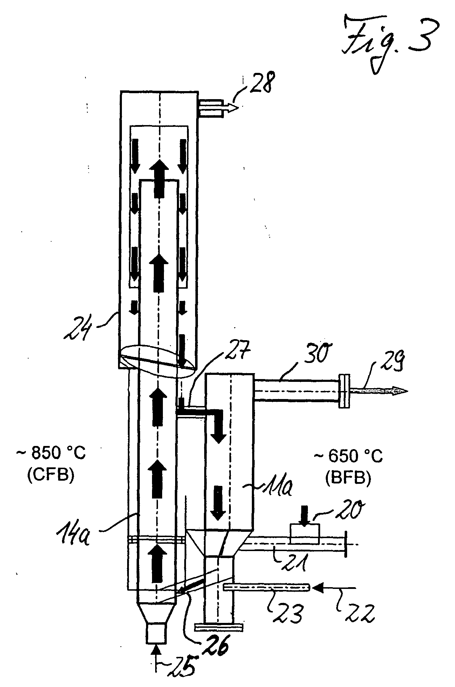

Fig. 3 zeigt eine weitere mögliche Anlagenvariante zur Durchführung des erfindungsgemäßen AER-Prozesses. Diese Anlage geht aus von dem an sich bekannten, oben erwähnten FICFB-Anlagentyp und ist geeignet zur Durchführung des vorliegenden AER-Prozesses modifiziert. Speziell weist die Anlage von Fig. 3 einen säulenförmigen Vergasungsreaktor 11a auf, dem Biomasse 20 über einen Einsatzstoffeinlass 21 und Wasserdampf 22 über einen Dampfeinlass 23 im unteren Bereich zuführbar ist. Der Vergasungsreaktor 11a ist vom Typ mit einem sogenannten BFB (Bubbling Fluidised Bed), bei dem das Bettmaterial im unteren Teil des säulenförmigen Reaktors 11a verbleibt. Als Bettmaterial dient hierbei ein zur Durchführung des AER-Prozesses geeignetes CO₂₋Absorbens, wie oben zu den Fig. 1 und 2 beschrieben.

Neben dem Vergasungsreaktor 11a ist ein ebenfalls säulenförmiger Verbrennungsreaktor 14a vom Typ mit sogenanntem CFB (Circulating Fluidised Bed) angeordnet, bei dem das Bettmaterial in einem oberen Teil 24 des säulenförmigen Verbrennungsreaktors 14a ausgetragen wird.

Wie durch Pfeile in Fig. 3 veranschaulicht, wird ein Luftstrom 25 unterseitig in den Verbrennungsreaktor 14a eingeleitet, und ebenso wird in den unteren Teil des Verbrennungsreaktors 14a das zu regenerierende CO₂-Absorbens zugeführt, indem es über eine untere Siphonleitung 26 aus dem Bodenbereich des benachbarten Vergasungsreaktors 11a abgezogen wird. Im Verbrennungsreaktor 14a erfolgt dann die Desorption des CO₂-Absorbens, wie oben zu den Fig. 1 und 2 erläutert, in diesem Fall durch die CFB-Technik, bei welcher durch geeignete, wiederholte Strömungsumlenkung im oberen Reaktorteil 24 das regenerierte CO₂₋Absorbens vom CO₂-reichen Abgas separiert wird. Das regenerierte CO₂-Absorbens verlässt den oberen Verbrennungsreaktorteil 24 an dessen Unterseite und wird über eine obere Siphonleitung 27 in den oberen Bereich des Vergasungsreaktors 11a eingespeist, während der CO₂reiche Abgasstrom 28 im oberen Teil des Verbrennungsreaktors 14a abgeführt wird. Das im Vergasungsreaktor 11a gewonnene, teerarme wasserstoffreiche Produktgas 29 wird über einen im oberen Vergasungsreaktorbereich angeordneten Produktgasauslass 30 abgeführt.

Aschebestandteile werden vom Abgasstrom 28 mitgeführt und können z.B. durch einen nicht gezeigten, nachgeschalteten Zyklon absepariert werden. Auch bei diesem Anlagentyp wird daher eine separate Abtrennung von rezykliertem Bettmaterial einerseits und Asche andererseits erreicht.

Beispielhaft sind in Fig. 3 für den Vergasungsreaktor 11a mit BFB-Technik eine Temperatur von ca. 650°C und für den Verbrennungsreaktor mit CFB-Technik eine Temperatur von ca. 850°C bei drucklosem Betrieb und für CaO-haltige Absorbermaterialien, wie Calcit und Dolomit, angegeben. Diese Temperaturen eignen sich z.B. auch für die Anlagenvariante von Fig. 2. Es ist, wie schon oben angedeutet, bevorzugt, dass bei der Niedertemperaturvergasung unterhalb des Ascheerweichungspunktes gearbeitet wird. Denn es lassen sich dann problemlos auch relativ mineralstoffreiche Biomasse-Brennstoffe einsetzen. Für den angegebenen Temperaturbereich von ca. 650°C für den Vergasungsprozess ist dies ohne weiteres gewährleistet. Im Verbrennungsprozess liegt zwar mit den angegebenen ca. 850°C eine merklich höhere Temperatur als im Vergasungsprozess vor, es zeigt sich aber, dass dies beim vorliegenden AER-Prozess nicht besonders kritisch ist bzw. durch geeignete Maßnahmen dafür gesorgt werden kann, dass diesbezüglich keine störenden Effekte auftreten. So kann z.B. im Verbrennungsreaktor eine deutlich stärkere Fluidisierung, insbesondere mit Luft, eingestellt werden als im Vergasungsreaktor mit Wasserdampf, wobei z.B. beim FICFB-Prozess von Fig. 3 das Festmaterial im oberen Teil 24 des Verbrennungsreaktors 14a ausgetragen wird, wie oben erläutert. Des weiteren kann die Prozessführung so gewählt werden, dass die Mediumaufenthaltszeit im Verbrennungsreaktor ausreichend kürzer ist als im Vergasungsreaktor. Zudem können beim vorliegenden Prozess die mineralischen Anteile als Teil des Kokses aus dem Vergasungsreaktor in den Verbrennungsreaktor transportiert und dort direkt in der umgebenden Luft verbrannt und als Flugasche ausgetragen werden, bevor sie merklich mit dem Bettmaterial reagieren. So können z.B. siliziumhaltige Mineralien über den eingesetzten Brennstoff in den Prozess eingetragen werden, ohne sich im Prozesskreislauf anzureichern, da sie als Flugasche oder im Purge aus dem Prozess abgeführt werden.

Eine weitere Maßnahme besteht darin, das Bettmaterial im Sinne einer Anhebung des Ascheerweichungspunktes zu wählen, z.B. ein Calcit-Bettmaterial mit hohem Ca-Anteil. Des weiteren lässt sich das Bettmaterial so wählen, z.B. mit wenig oder ohne SiO₂-Anteil, dass eine Bildung von chemischen Verbindungen, wie Alkali-Silikaten, die zu einem Verkleben des Bettmaterials führen können, verhindert wird. Beispielsweise ist bei Verwendung von reinem Calcit (CaCO₃) als Bettmaterial kein SiO₂ vorhanden oder allenfalls sehr wenig als Bestandteil des Bettmaterials und/oder des Brennstoffs, so dass selbst bei den im Verbrennungsreaktor herrschenden Temperaturen von z.B. etwa 850°C keine durch SiO₂ verursachte Agglomeration des Bettmaterials auftritt.

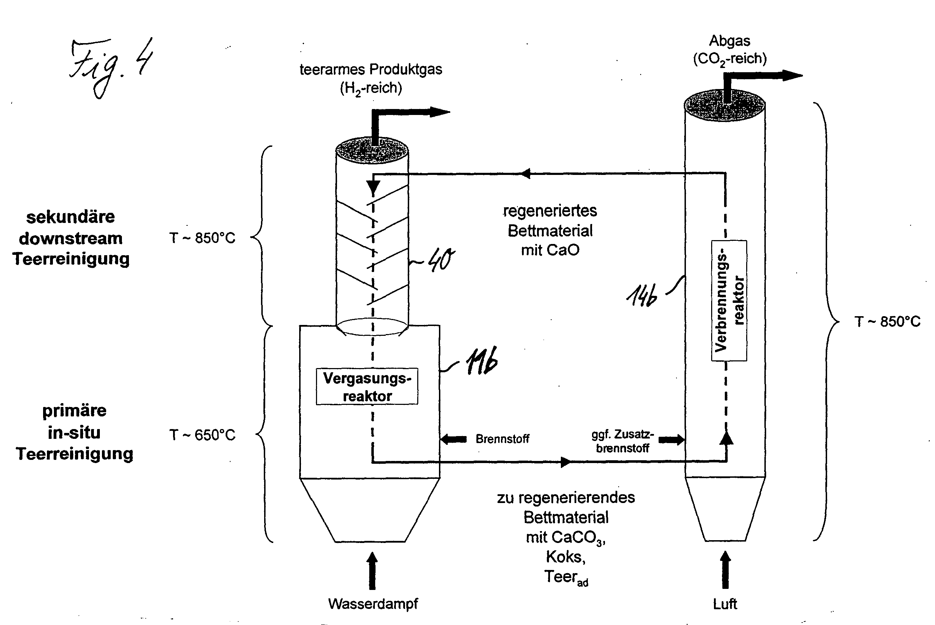

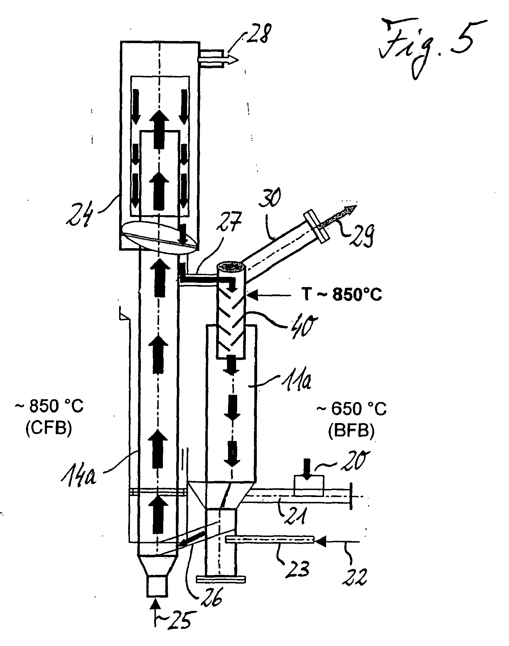

Die Fig. 4 und 5 veranschaulichen eine weitere, sehr vorteilhafte Variante der AER-Prozessführung, und zwar eine solche mit einer sekundären Teerreinigung. Fig. 4 zeigt dazu schematisch einen geeigneten Anlagenaufbau und die zugehörige Prozessführung. Wie daraus ersichtlich, entspricht diese Variante hinsichtlich Niedertemperaturvergasung in einem Vergasungsreaktor 11b und thermischer Desorption des CO₂bindenden Absorbermaterials in einem Verbrennungsreaktor 14b einschließlich der entsprechend zugeführten und abgeführten Medien und der sonstigen Prozessparameter vollständig den oben zu den Fig. 1 bis 3 beschriebenen Ausführungsvarianten, worauf verweisen werden kann.

Zusätzlich ist die Anlage bzw. das Produktgaserzeugungsverfahren von Fig. 4 dadurch charakterisiert, dass dem Vergasungsreaktor 11 b, in welchem die Produktgaserzeugung mit primärer In-situ-Teerreinigung erfolgt, in Produktgasströmungsrichtung eine sekundäre Teerreinigungsstufe 40 nachgeschaltet ist, in welcher das aus dem Vergasungsreaktor 11 b abgeführte Produktgas mit regeneriertem CO₂-Absorbensbettmaterial, das z.B. CaO beinhaltet, in Kontakt gebracht wird, bevor das regenerierte Bettmaterial dann in den Vergasungsreaktor 11 b rezykliert wird. Es zeigt sich, dass mit dieser sekundären Teerreinigungsmaßnahme der Teergehalt im Produktgas in sehr vorteilhafter Weise nochmals deutlich z.B. um eine Größenordnung, d.h. eine Zehnerpotenz, verringert werden kann. Dies lässt sich wie folgt erklären.

Im Verbrennungsreaktor 14b wird das CO₂-Absorbens durch den Calcinierungsprozess bei gegenüber der Niedertemperaturvergasung erhöhter Temperatur regeneriert, z.B. beim schon oben erwähnten Temperaturäquivalent von ca. 850°C verglichen mit einem Niedertemperaturvergasungs-Temperaturäquivalent von ca. 650°C. Dadurch fällt prozessintern entsprechend heißes CO₂-Absorbens an, bei dem es sich z.B. um ein Bettmaterial mit Dolomit/Calcit in der katalytisch aktiven Oxidform handeln kann. Dabei ist es an sich bekannt, dass bei Temperaturen oberhalb eines Temperaturäquivalenz von 800°C bei drucklosem Betrieb die kalzinierte Oxidform anstelle der Carbonatform vorliegt. Das entsprechend heiß z.B. mit ca. 850°C aus dem Verbrennungsreaktor 14b austretende, regenerierte Absorbermaterial heizt das aus dem Vergasungsreaktor 11b mit dem niedrigeren Temperaturniveau kommende Produktgas auf. Durch diese Anhebung der Temperatur des rohen Produktgases und die Gegenwart des katalytisch aktiven, regenerierten, z.B. CaO-haltigen Bettmaterials von der Vergasungstemperatur von z.B. etwa 650°C auf die Calcinierungstemperatur des Bettmaterials von z.B. etwa 850°C wird die besagte weitere, sekundäre Verringerung des Teergehaltes des aus dem Vergasungsreaktor 11 b kommenden Produktgases um beispielsweise ca. eine Größenordnung erreicht. Wegen des relativ hohen Temperaturniveaus von ca. 850°C wird das bei der Teerreformierung entstehende CO₂ in der sekundären Teerreinigungsstufe 40 im Gegensatz zur Situation im Vergasungsreaktor 11 b nicht absorbiert. Für die sekundäre Teerreinigungsstufe 40 sind, wie der Fachmann versteht, verschiedene an sich bekannte Reinigungsreaktortypen einsetzbar, z.B. ein solcher mit einem Schüttbettfilter oder mit einer durch das Produktgas fluidisierten Schüttschicht. Vorzugsweise wird zur Intensivierung des Wärmeübertrags das Produktgas in der sekundären Teerreinigungsstufe 40 im Gegenstrom zum calcinierten Absorbermaterial geführt, wie im Beispiel von Fig. 4 gezeigt.

Ein weiterer Vorteil der Verfahrensführung mit sekundärer Teerreinigung gemäß Fig. 4 liegt darin, dass dem regenerierten Bettmaterial in der sekundären Teerreinigungsstufe 40 nach der Calcinierung und vor dem Eintritt in die Vergasungszone Wärme entzogen wird, und zwar einerseits durch Wärmetransport auf das kühlere Produktgas und andererseits dadurch, dass in der sekundären Teerreinigungsstufe 40 bei dem gegebenen hohen Temperaturniveau von z.B. 850°C eine konventionelle endotherme Teerreformierung ohne CO₂-Absorption erfolgt. Beide Wärmesenken führen zu einer Abkühlung des regenerierten Absorbermaterials vor Eintritt in die Vergasungszone. Dies wirkt jeglichen Überhitzungserscheinungen des Vergasungsreaktors 11 b entgegen, so dass anderweitige Kühlmaßnahmen ganz oder teilweise entfallen können. Dies gilt besonders bei Einsatz von trockener Biomasse, z.B. getrockneten Holz, da in solchen Fällen die Summenreaktion von endothermer Biomasse-Vergasungsreaktion, exothermer CO₂-Absorption und exothermer Wassergas-Shift-Reaktion, die alle parallel im Vergasungsreaktor 11 b ablaufen, schwach exotherm ist, so dass Wärme aus dem AER-Vergasungsreaktor 11 b abgeführt werden muss.

Fig. 5 zeigt eine Realisierung des AER-Prozesses mit sekundärer Teerreinigung gemäß Fig. 4 durch entsprechende Modifikation der Anlage von Fig. 3 auf Basis der FICFB-Technik, wobei identische oder funktionell äquivalente Komponenten der Anlage von Fig. 5 mit jeweils gleichem Bezugszeichen versehen sind und insoweit auf die obigen Erläuterungen zu Fig. 3 verwiesen werden kann. Als einziger signifikanter Unterschied ist die Anlage von Fig. 5 im Vergleich zur Anlage von Fig. 3 mit der zusätzlichen sekundären Teerreinigungsstufe 40 gemäß Fig. 4 ausgerüstet. Dazu ist sie im gezeigten Beispiel als säulenförmige Reaktoreinheit in die Oberseite des säulenförmigen BFB-Vergasungsreaktors 11 b eingesetzt. In ihrem oberseitigen Bereich ist die sekundäre Teerreinigungsstufe 40 mit einer Auslassöffnung, an die der Produktgasauslass 30 angekoppelt ist, und einer Einlassöffnung versehen, in welche die obere Siphonleitung 27 mündet, über die das im Verbrennungsreaktor 14a regenerierte und aufgeheizte Absorbermaterial nach Abtrennung vom Abgas 28 in die sekundäre Teerreinigungsstufe 40 eingeleitet wird. Dort tritt sie im Gegenstrom mit dem aus dem Vergasungsreaktor 11 a austretenden Produktgas in Kontakt, um dessen weitere, sekundäre Teerreinigung durch Erwärmung und/oder katalytische Wirkung zu bewirken, wie oben zu Fig. 4 im Detail erläutert.

Wie aus der obigen Beschreibung deutlich wird, stellt das AER-Verfahren gemäß den Fig. 4 und 5 eine Kombination einer primären Teerreinigungsmaßnahme während des Vergasungsvorgangs mit einer sekundären Teerreinigungsmaßnahme mit einem CO₂-Absorbens dar, das hierbei insbesondere eine chemische Carbonat/Oxid-Umwandlung beinhalten kann. Die primäre Teerreinigung erfolgt auf dem AER-Vergasungstemperaturniveau, während die sekundäre Teerreinigung auf dem Calcinierungs-Temperaturniveau bzw. auf einem Temperaturniveau etwas unterhalb der Calcinierungstemperatur abläuft, wenn sich das CO₂-Absorbens auf dem Weg zur Teerreinigungsstufe etwas abkühlt. Das CO₂-Absorbens bzw. das Bettmaterial ist in vorteilhafter zweifacher Weise als CO₂-Absorptionsmiftel und als Katalysator aktiv und läuft im Kreislauf zwischen zwei oder mehr Reaktoren um.

Es versteht sich, dass die sekundäre Teerreinigungsstufe alternativ zum FICFB-Anlagenkonzept gemäß Fig. 5 auch bei anderen AER-Anlagenkonzepten mit gekoppelten Vergasungs-/Calcinierungsreaktoren eingesetzt werden kann, z. B. in Anlagen mit gekoppelten Wirbelschichten an sich bekannter Art z.B. gemäß der oben erwähnten DE 199 46 381 C2.

In den gezeigten Beispielen der Fig. 1 bis 5 sind der Vergasungsreaktor und der Verbrennungsreaktor parallel mit gleichzeitigem Betrieb, d.h. eine allotherme Prozessführung, vorgesehen, so dass eine kontinuierliche Produktgaserzeugung möglich ist. Alternativ sind auch eine Eintopfrealisierung, bei der eine einzige Reaktoreinheit abwechselnd im AER-Prozessbetrieb und im Desorptionsbetrieb gefahren wird, oder ein alternierender Wechselbetrieb wenigstens zweier Reaktoren erfindungsgemäß möglich. Letzteres erlaubt ebenfalls eine kontinuierliche Produktgaserzeugung.

Für die Reaktoreinheiten sind außer solchen vom Wirbelschichttyp auch solche vom Flugstromtyp oder vom Bewegtbetttyp, z.B. Drehrohr- oder Wanderbettreaktoren, verwendbar. Der Energieeintrag vom Verbrennungs-/Desorptionsreaktor zum Vergasungsreaktor erfolgt typischerweise durch einen Feststoff-Wärmeträger, insbesondere das CO₂₋Absorbens. Zusätzlich zu Wasserdampf kann dem Vergasungsreaktor bei Bedarf auch rezykliertes Produktgas als Vergasungsmittel zugesetzt werden. Bei Einsatz feuchter Biomasse ist ggf. keine Dampfzufuhr nötig.

Die Fluidisierung erfolgt dann mit einem Teil des rezyklierten Produktgases.

Der Einsatz feuchter Biomasse kann vorteilhaft auch als Maßnahme gegen eine etwaige Überhitzung des AER-Vergasungsreaktors vorgesehen werden, so dass ein hierzu ansonsten erforderlicher Wärmetauscher entfallen oder geringer dimensioniert werden kann. Durch Zugabe von feuchter Biomasse z.B. in Form von waldfrischem Holz mit bis zu 50% Wassergehalt kann einem Temperaturanstieg im Vergasungsreaktor durch die resultierende Verdampfungsenthalpie des Wassers entgegengewirkt werden. Die entsprechende Temperaturregulierung kann somit eine Erfassung der Vergasungsreaktionstemperatur und eine davon abhängige Zugabe feuchter Biomasse beinhalten, so dass die überwachte Temperatur im Vergasungsreaktor unter einem vorgegebenen Überhitzungsgrenzwert bleibt oder auf einen vorgegebenen Sollwert geregelt wird. Das vorliegende Verfahren hat folglich den Vorteil, dass bei entsprechender Prozessführung direkt feuchte Biomasse als Einsatzstoff verwendet werden kann, ohne dass diese eine aufwändige Vortrocknung benötigt.

Der Wärmeeintrag in den Vergasungsreaktor erfolgt sowohl über fühlbare Wärme als auch durch die exotherme CO₂-Absorption während der Vergasung als chemische Energie. Je nach Einsatzstoff kann dem Vergasungsreaktor zusätzlich ein katalytisch aktives Bettmaterial zugegeben werden.

Durch die Erfindung ergibt sich folglich für die Vergasungszone eine Absenkung der Vergasungstemperatur mittels Verschiebung des chemischen Reaktionsgleichgewichtes durch Einsatz des CO₂-Absorbens, ein erhöhter Einsatzstoffumsatz bei verminderter Reaktionstemperatur durch die Verwendung einer absorptionsunterstützten Wasserdampfvergasung-/reformierung des Einsatzstoffs und von dessen Folgeprodukten, eine hydrierende Vergasung/Reformierung des Einsatzstoffs und von dessen Folgeprodukten, ein Hydrocracken von Teeren, eine Absorption des entstehenden CO₂ durch das betreffende Absorbens und eine Adsorption von Teeren auf dem eingesetzten Bettmaterial und den erzeugten (Koks)-Vergasungsrückständen. In der Verbrennungszone erfolgt die Verbrennung der Vergasungsrückstände und ggf. von Zusatzbrennstoff mit Luft sowie ggf. von adsorbierten Folgeprodukten, einschließlich Teeren, und die Regenerierung des Absorbens.

Insgesamt ergibt sich durch die Erfindung eine reduzierte Anlagenkomplexität, eine vereinfachte Gasreinigung, eine hohe energetische Effizienz mit abgesenkter Vergasungstemperatur, geringere Investitions- und Betriebskosten, eine hohe Lebensdauer eines vom Produktgas gespeisten Verstromungsaggregates aufgrund geringer Teergehalte bzw. unproblematischerer Teere und ein geringerer Aufwand bei der Entsorgung von teerhaltigen Waschlösungen. Besonders vorteilhaft kann der Teergehalt des Produktgases durch die prozessintegrierte sekundäre Teerreinigung unter Verwendung des durch den Calcinierungsprozess aufgeheizten und/oder katalytisch aktiven, regenerierten Absorbermaterials weitergehend merklich verringert werden. Hierdurch geht der Energiegehalt der Teere in das Produktgas über, was die Effizienz erhöht. Als Bettmaterial kann ein solches benutzt werden, das neben der Fähigkeit zur CO₂-Absorption katalytische Aktivitäten bezüglich Teerabbau besitzt. Zu entsorgendes Bettmaterial ist nicht toxisch, und Schadstoffe, wie Schwefel und Halogenverbindungen, können im Bettmaterial eingebunden werden. Das zu entsorgende Bettmaterial kann gegebenenfalls als Nutzprodukt, z.B. Dünger, verwendet werden Das erzeugte Produktgas eignet sich gut zur motorischen Gasnutzung, eventuell schon ohne nachgeschaltete Teerreinigung. Dabei können als Einsatzstoff auch mineralstoffreiche halmartige Biomassen, wie Stroh, und/oder feuchte Biomassen, z.B. Klärschlamm-Biomasse, in AER-Prozessen z.B. mit Wirbelschichtvergasung eingesetzt werden.

Die Zusammensetzung des Produktgases und dessen Teergehalt können insbesondere auch durch entsprechende Einstellung bzw. Steuerung der Rezirkulationsrate und der Verweilzeit von CO₂-Absorbens und Produktgas im jeweiligen Reaktor beeinflusst bzw. in gewünschter Weise eingestellt werden.

Für eine weitere Steigerung der Adsorptionsfähigkeit können bei Bedarf entsprechende Adsorbermaterialien, wie Zeolithe, zum Bettmaterial zugegeben werden.

Als CO₂-Absorbens eignen sich z.B. die schon in der genannten Patentschrift DE 199 46 381 C2 hierfür angegebenen Materialien, worauf verwiesen werden kann. Zusätzlich sind auch synthetische Silikate, wie Lithiumsilicat und andere Alkalisilikate, synthetische Zirkonate, wie Lithiumzirkonat und andere Alkalizirkonate, natürliche Carbonate vom Typ Mₓ(CO₃)_{y}, wobei M für die Elemente Mg, Ca, Sr, Ba, La, Mn und Y steht, wie Ankerit, Barytocalcit, Strontianit, Hydrotalcit, Huntit etc., Hydroxide, komplexe natürliche Silikate, wie Bakerit, Datolit, Howlit, Jasmundit, Spurrit und andere Nesosilicate, Inosilikate, Cyclosilikate, Phyllosilikate, wie Sugilite, Spodumene, Petalite, Zinnwaldite, Lepidolite etc., Silikat-Carbonate und Kombinationen dieser Materialien einsetzbar. Das natürliche oder synthetische Absorbermaterial kann hierbei katalytisch aktiviert werden. Es können auch natürliche Absorbermaterialien eingesetzt werden, die durch eine mechanische, thermische und/oder chemische Vorbehandlung stabilisiert werden.

## Patentansprüche

1. Verfahren zur Erzeugung eines Produktgases durch thermochemische Vergasung eines kohlenstoffhaltigen Einsatzstoffes, insbesondere Biomasse,
**dadurch gekennzeichnet, dass**
- in einem ersten Prozessschritt eine Niedertemperaturvergasung des kohlenstoffhaltigen Einsatzstoffes in Gegenwart eines exotherm CO₂-bindenden Absorbermaterials derart durchgeführt wird, dass ein teerarmes Produktgas erhalten wird, und
- in einem zweiten Prozessschritt das Absorbermaterial durch eine thermische Desorptionsreaktion unter CO₂-Freisetzung regeneriert wird.

2. Verfahren nach Anspruch 1, weiter **dadurch gekennzeichnet, dass** der erste Prozessschritt eine Niedertemperaturvergasung bei einer Temperatur unterhalb einer Ascheerweichungstemperatur des Einsatzstoffes und/oder unterhalb eines Temperaturäquivalents von ca. 800°C bei einem Druck von 1 bar, insbesondere unterhalb eines Temperaturäquivalents von ca. 700°C bei einem Druck von 1bar, und/oder in einem auf drucklosen Betrieb bezogenen Temperaturäquivalentbereich zwischen etwa 600°C und etwa 700°C, insbesondere von etwa 650°C, beinhaltet.

3. Verfahren nach Anspruch 1 oder 2, weiter **dadurch gekennzeichnet, dass** die Prozessparameter so eingestellt werden, dass der Teergehalt des durch die Niedertemperaturvergasung erzeugten Produktgases unterhalb von 2g/Nm³, insbesondere im Bereich von 0,5 g/Nm³ oder niedriger, gehalten wird.

4. Verfahren nach einem der Ansprüche 1 bis 3, weiter **dadurch gekennzeichnet, dass** die Niedertemperaturvergasung im ersten Prozessschritt eine Pyrolyse- und/oder Dampfreformierungsreaktion des kohlenstoffhaltigen Einsatzstoffes in Gegenwart des exotherm CO₂-bindenden Absorbermaterials umfasst.

5. Verfahren nach einem der Ansprüche 1 bis 4, weiter **dadurch gekennzeichnet, dass** als Absorbermaterial ein Metalloxid vom Typ MₓO_{y} oder die calcinierte Form eines natürlichen Carbonats vom Typ Mₓ(CO₃)_{y} oder eines Metalloxocarbonats vom Typ MₓO_{y}(CO₃)_{z}, wobei M Mg, Ca, Sr, Ba, La, Mn oder Y bezeichnet und x, y, und z positive reelle Zahlen bezeichnen, oder Hydroxid oder die calcinierte Form einer komplexen Carbonatverbindung mit strukturerhaltender Matrix vom Typ (M²⁺)ₓ(M³⁺)_{y}(OH)_{z}CO₃·n·H₂O oder ein synthetisches Silicat, insbesondere ein Alkalisilicat, oder ein synthetisches Zirkonat, insbesondere ein Alkalizirkonat, oder eine komplexe natürliche Silicatverbindung oder eine Mischung der genannten Materialien verwendet wird.

6. Verfahren nach einem der Ansprüche 1 bis 5, weiter **dadurch gekennzeichnet, dass** im Einsatzstoff enthaltene Schadstoffe, insbesondere Schwefel- und/oder Halogenverbindungen, bei der Niedertemperaturvergasung in das geeignet gewählte CO₂-bindende Absorbermaterial eingebunden werden.

7. Verfahren nach einem der Ansprüche 1 bis 6, weiter **dadurch gekennzeichnet, dass** als Einsatzstoff mineralstoffreiche und/oder feuchte Biomasse verwendet wird.

8. Verfahren nach Anspruch 7, weiter **dadurch gekennzeichnet, dass** als Einsatzstoff wenigstens teilweise feuchte Biomasse verwendet und die zugeführte Menge an feuchter Biomasse in Abhängigkeit von einer überwachten Temperatur der Niedertemperaturvergasung derart gewählt wird, dass die Temperatur der Niedertemperaturvergasung unterhalb eines vorgebbaren Überhitzungsgrenzwertes bleibt.

9. Verfahren nach einem der Ansprüche 1 bis 8, weiter **dadurch gekennzeichnet, dass** für den ersten Prozessschritt und/oder den zweiten Prozessschritt ein das Absorbermaterial enthaltendes, SiO₂-armes oder SiO₂-freies Reaktorbettmaterial eingesetzt wird.

10. Verfahren nach einem der Ansprüche 1 bis 9, weiter **gekennzeichnet durch** einen dritten Prozessschritt in Form einer sekundären Teerreinigung des Produktgases, bei der das im ersten Prozessschritt erhaltene teerarme Produktgas mit dem **durch** die thermische Desorptionsreaktion im zweiten Prozessschritt regenerierten und aufgeheizten Absorbermaterial in Kontakt gebracht wird.

11. Verfahren nach Anspruch 10, weiter **dadurch gekennzeichnet, dass** das Absorbermaterial nach Durchlaufen des dritten Prozessschrittes zur Niedertemperaturvergasung des ersten Prozessschrittes rezykliert wird.

12. Verfahren nach Anspruch 10 oder 11, weiter **dadurch gekennzeichnet, dass** die Temperatur für den zweiten und dritten Prozessschritt in einem Temperaturäquivalentbereich zwischen etwa 800°C und etwa 900°C, insbesondere von etwa 850°C, bezogen auf drucklosen Betrieb gewählt wird.

13. Vorrichtung zur Erzeugung eines Produktgases durch thermochemische Vergasung eines kohlenstoffhaltigen Einsatzstoffes, insbesondere Biomasse, unter Verwendung des Verfahrens nach einem der Ansprüche 1 bis 12,
**gekennzeichnet durch**
- wenigstens eine Vergasungsreaktoreinheit (R1) zur Niedertemperaturvergasung des kohlenstoffhaltigen Einsatzstoffes in Gegenwart eines exotherm CO₂-bindenden Absorbermaterials zur Gewinnung eines teerarmen Produktgases und
- eine Einrichtung (R2) zur thermischen Desorption des Absorbermaterials unter CO₂-Freisetzung.

14. Vorrichtung nach Anspruch 13, weiter **dadurch gekennzeichnet, dass** die Desorptionseinrichtung eine Desorptionsreaktoreinheit, Mittel zur Zuführung von zu regenerierendem Absorbermaterial von der Niedertemperatur-Vergasungsreaktoreinheit zur Desorptionsreaktoreinheit und Mittel zur Zuführung von regeneriertem Absorbermaterial zur Niedertemperatur-Vergasungsreaktoreinheit umfasst.

15. Vorrichtung nach Anspruch 14, weiter **dadurch gekennzeichnet, dass** die Niedertemperatur-Vergasungsreaktoreinheit und die Desorptionsreaktoreinheit von einem Wirbelschichttyp sind und einem Gasausgang derselben je mindestens eine Materialabscheideeinheit zugeordnet ist, um zu regenerierendes CO₂-Absorbens aus dem von der Niedertemperatur-Vergasungseinheit abgegebenen Produktstrom und regeneriertes CO₂-Absorbens und/oder Asche separat aus einem von der Desorptions-reaktoreinheit abgegebenen Gasstrom abzutrennen.

16. Vorrichtung nach einem der Ansprüche 13 bis 15, weiter **gekennzeichnet durch** eine sekundäre Teerreinigungsstufe (40), die einen Absorbermaterialeinlass, einen Absorbermaterialauslass, einen Produktgaseinlass und einen Produktgasauslass aufweist, wobei der Absorbermaterialeinlass mit einem Absorbermaterialauslass der Einrichtung zur thermischen Desorption des Absorbermaterials in Verbindung steht, der Absorbermaterialauslass mit einem Absorbermaterialeinlass der Vergasungsreaktoreinheit in Verbindung steht und der Produktgaseinlass mit einem Produktgasauslass der Vergasungsreaktoreinheit in Verbindung steht und die sekundäre Teerreinigungsstufe so ausgelegt ist, dass in ihr zugeführtes Absorbermaterial mit zugeführtem Produktgas in Wirkkontakt kommt.
